# EUROPÄISCHE PATENTSCHRIFT

(11) **EP 3 871 486 B1**
(45) Veröffentlichungstag und Bekanntmachung des Hinweises auf die Patenterteilung: **08.04.2026**
(21) Anmeldenummer: 21156478.6
(22) Anmeldetag: 11.02.2021
(51) Int. Cl.: A01D 34/535, B02C 13/28, B02C 18/20

(54) **SCHLEGELEINHEIT**
BEATER UNIT
UNITÉ DE FLÉAUX

(30) Priorität: 26.02.2020 DE 102020001241
(43) Veröffentlichungstag der Anmeldung: 01.09.2021
(73) Patentinhaber: Müthing GmbH & Co. KG, 59955 Winterberg (DE)
(72) Erfinder: Arnold, Martin, 38275 Steinlah (DE); Henkel, Simon, 57392 Schmallenberg (DE); Müthing, Michael, 59955 Winterberg (DE)
(74) Vertreter: Lichti - Patentanwälte Partnerschaft mbB

(56) Entgegenhaltungen:
- EP-A1- 2 647 277
- DE-A1- 102005 023 014
- US-A- 3 604 188

## Beschreibung

Die Erfindung betrifft eine Schlegeleinheit nach dem Oberbegriff des Anspruchs 1.

Es sind Schlegeleinheiten mit einem Schlegelhalter bekannt, der starr am Rotor eines Mulchers fixiert ist und bei dem sich die Schlegel nur um eine Achse des Schlegelhalters bewegen können. Um Schlegeln eine größere Beweglichkeit zu verleihen, werden schon Schlegeleinheiten vorgesehen, bei denen zwischen dem Schlegelhalter und dem Schlegel selbst ein Schäkel vorgesehen ist, der dem Schlegel in gewissem Grade größere Bewegungsfreiheiten ermöglicht, wie seitliches Auspendeln oder Ausweichen. Weitere Nachteile bei bekannten Schlegeleinheiten sind, dass die Schlegel eine massive Form, insbesondere über ihre gesamte Höhe eine relativ große Breite aufweisen, was einen erhöhten Luftwiderstand bedingt und zum anderen die Zerkleinerungswirkung begrenzt. Auch ist die Gewichtsverteilung des Schlegels bei bekannten Schlegeleinheiten derart, dass diese zur Begrenzung der Lebensdauer beiträgt.

Die EP 2 647 277 A1 zeigt eine gattungsgemäße Schlegeleinheit mit einem Zerkleinerungsschlegel, der an einem Rotor eines Schlegelmulchers zum Zerkleinern von Pflanzenmaterial, wie Gras, faserigen oder holzigen Pflanzen, Sträuchern, Baumschnitt und dergleichen, angebracht werden kann; der Schlegel hat einen Schlegelkörper, der einen quer verlaufenden Messerabschnitt zum Zerkleinern des Materials und einen länglichen Schaftabschnitt zur gelenkigen Verbindung mit dem Rotor umfasst. Die Vorderseite des Schlegels ist mit einer Ausstülpung versehen, die eine verlängerte Fläche zum Auftreffen auf die Umfangsfläche der Welle des Rotors definiert.

Die US 3 604 188 zeigt keine gattungsgemäße Schlegeleinheit mit achsparallelen Zerkleinerungskanten aufweisenden Schlegeln, sondern betrifft einen Mäher, der Mittel zum abnehmbaren Anbringen von achssenkrecht gerichteten Kanten aufweisenden Schneidmessern an einer drehbaren Welle des Mähers umfasst. Der Mäher umfasst eine im Allgemeinen horizontale, drehbare Welle, Mittel zum Drehen der Welle mit hoher Geschwindigkeit, eine Vielzahl von Schneidmesserträgern, die an der Welle befestigt sind, und ein oder mehrere Schneidmesser, die an jedem der Messerträger angebracht sind. Die Halterungen sind winklig und in Umfangsrichtung entlang der Länge der Welle beabstandet, so dass die Kanten der Messer bei Drehung der Welle einen Schwaden schneiden, der über die Länge der Welle im Wesentlichen kontinuierlich ist. Jeder Messerträger umfasst ein Element, das nur an einem Ende getragen wird, einen im Allgemeinen kreisförmigen Mittelteil, der die Schneidmesser während des Mähbetriebs trägt, und einen freien Endteil, der einen Versatz oder Vorsprung aufweist und somit einen unrunden Querschnitt bildet. In jedem Schneidmesser ist ein Loch ausgebildet, das so geformt ist, dass das Messer über den Vorsprung des freien Endabschnitts geschoben werden kann, wenn das Messer in einem bestimmten Winkel relativ zum freien Endabschnitt angeordnet ist. Nach dem Passieren des freien Endabschnitt wird das Messer zum mittleren Abschnitt des Elements bewegt und schwingt locker auf dem mittleren Abschnitt. Der Vorsprung des freien Endabschnitts verzögert dann ein versehentliches Entfernen des Messers aus dem Element.

Die DE 10 2005 023 014 A1 zeigt ebenfalls keinen Schlegelmulcher mit Schlegeleinheiten mit achsparallelen Zerkleinerungskanten aufweisenden Schlegeln, sondern eine Vorrichtung zum Schneiden von insbesondere hochwachsendem Schnittgut. Diese weist eine umlaufend angetriebene Welle und in Messerhaltern an der Welle paarweise symmetrisch beweglich aufgehängte mit achssenkrechten Schneidkanten aufweisende Messer auf. Die Messer bestehen aus je einem plattenförmigen Grundkörper mit einem sich im Wesentlichen radial erstreckenden Aufhängeschenkel und einem dazu abgewinkelten Schneideschenkel, die sich bei angetriebener Welle unter Fliehkrafteinwirkung aneinander abstützen und ausrichten und mit denen das Schnittgut geschnitten wird. Zwischen Schneideschenkel und Aufhängeschenkel ist ein Winkel von etwa 90° vorgesehen, sodass die Schlegelmesser L-Form aufweisen
Der Erfindung liegt die Aufgabe zugrunde, eine gattungsgemäße Schlegeleinheit dahin weiter zu bilden, dass ohne Zwischenanordnung eines Schäkels der Schlegel selbst größere Bewegungsmöglichkeiten, insbesondere über das Verschwenken um eine Halteachse hinausgehende Freiheitsgrade hat.

Erfindungsgemäß wird die genannte Aufgabe bei einer gattungsgemäßen Schlegeleinheit durch die kennzeichnenden Merkmale des Anspruchs 1 gelöst.

Der Querdurchbruch des Schlegels kann dabei insbesondere als Langloch ausgebildet sein, wobei demgemäß die Querabmessungen des Durchbruchs in seiner Erstreckungsrichtung über seine gesamte Länge konstant sind. Alternativ können sich die Querabmessungen des Durchbruchs auch von seinem Mittelteil zu den Enden oder Öffnungen vergrößern, wobei insbesondere die größere Querabmessung als ovaler Querschnitt sich zu den Enden und Öffnungen des Schlegelkopfes vergrößert. Die kleinste Querschnittabmessung kann sich ebenfalls erweitern, bleibt aber vorzugsweise beim Durchmesser des Haltestabs - unter Berücksichtigung üblicher technischer Toleranzen.

Durch die erfindungsgemäße Ausgestaltung wird erreicht, dass der Schlegel sowohl in seiner Erstreckungsrichtung oder Radialrichtung zum Haltestab eine größere Beweglichkeit hat als auch in seitlicher Richtung entlang seiner Querabmessungen bzw. in Erstreckungsrichtung einer Rotorachse der Anordnung an einem Rotor.

Durch diese erfindungsgemäße Ausgestaltung einer Schlegeleinheit wird zum einen die Zerkleinerung des Pflanzenguts verbessert, zum anderen können Schlegel bei zu starken Pflanzengut, wie Ästen, ausweichen, was zur Erhöhung ihrer Lebensdauer beiträgt.

In weiterer bevorzugter Ausgestaltung ist vorgesehen, dass die größere Querschnittsabmessung des Durchbruchs sich in Richtung zu einem Schneidabschnitt des Schlegels erstreckt.

Dies gilt demgemäß auch für die Querschnittsabmessung des Durchbruchs in Form eines Langlochs.

Die erfindungsgemäße Lösung sieht in Weiterbildung vor, dass die größte Querabmessung des Durchbruchs mindestens das 1,2- vorzugsweise mindestens 1,4-fache der größten Querabmessung des Haltestabs ist, wobei insbesondere der Durchbruch ein Langloch ist und/oder der Haltestab einen zylindrischen Querschnitt hat.

In weiterer erfindungsgemäßer Ausbildung ist vorgesehen, dass die Breite des Verbindungsbereichs des Schlegels höchstens 0,3, vorzugsweise höchstens 0,25 der Breite des Schneidabschnitts beträgt. Durch eine solche starke Verschlankung des Verbindungsbereichs wird der erforderliche Energieaufwand zur Zerkleinerung des Pflanzenguts gegenüber den bekannten Ausführungen deutlich geringer, da durch die Verschlankung des Verbindungsbereichs eine Minimierung der Ventilationswirkung durch die Bewegung der Schlegel erreicht wird und damit auch der - das Pflanzengut fordernde - Strömungsverlauf verbessert wird, in dem Luftstau sowie die Entstehung von Schleppwirbeln hinter den Schlegeln deutlich verringert werden.

Darüber hinaus wird in vorteilhafter Weise durch die vorstehende erfindungsgemäße Weiterbildung eine Verlagerung der Masse und des Gewichtsschwerpunktes zum äußeren Rand des Schlegels hin bewirkt mit der Folge einer höheren Dauerfestigkeit aufgrund der Schwerpunktverlagerung nach außen. Insgesamt wird so eine Optimierung der Schnittkraft und damit der Schnittwirkung des Schlegels erzielt.

Durch die schlankere Ausbildung des Schlegels im Verbindungsbereich wird bewirkt, dass das Material hier im Fördervorgang besser abfließen kann, sich verlangsamt und damit ein größerer Teil der zu zerkleinernden Biomasse durch die nach wie vor bestehende Fliehkraft sich wieder nach außen bewegt und damit mehrfach von nachfolgenden Schlegeln radial außen erfasst und so durch eine Vielzahl von Schlegelkontakten weiter zerkleinert und zerfasert wird. Dies bewirkt eine weitere Verbesserung der Qualität des gemulchten Gutes im Endergebnis.

Gemäß bevorzugter Ausgestaltung ist vorgesehen, dass die Kante unter einem Winkel zwischen 40° und 50° verläuft und/oder dass der auf dem Haltestab aufsitzende Schlegelkopf eine Breite hat, die geringer ist als der Abstand von die axiale Bewegung des Schlegels entlang des Haltestabs begrenzenden radialen Begrenzungen. Hierdurch wird einerseits bei rotatorischer Bewegung des Schlegels um den Haltestab, andererseits bei translatorischer Bewegung des Schlegels entlang der Achse des Haltestabs eine schälende Reinigung der Oberfläche des Stabs bewirkt. Dieser bleibt somit frei von Ablagerungen, so dass ein Werkzeugwechsel einfach ist.

Eine bevorzugte Weiterbildung zeichnet sich dadurch aus, dass der Schlegel wenigstens in einem Verbindungsbereich mindestens einseitig eine Rippe aufweist, die sich senkrecht zur Breite des Schneidabschnitts erstreckt, wobei insbesondere vorgesehen ist, dass der Schlegel beidseitig Rippen aufweist.

Durch die Verstärkungsrippen wird trotz dem Verschlankung des Verbindungsbereichs des Schlegels die erforderliche Stabilität und Bruchfestigkeit gewährleistet und damit insgesamt eine Erhöhung der Lebensdauer aufgrund des hierdurch trotz der Reduzierung der Querabmessungen des Verbindungsbereichs größeren Materialquerschnitts, insbesondere auch in eigentlichen Schneid- und Zerkleinerungs- sowie Förderbereich außen erzielt.

Während grundsätzlich vorgesehen sein kann, dass der Schlegelkopf gegenüber einem Verbindungsbereich verbreitert ausgebildet ist, wobei die Breite des Schlegelkopfes mindestens das Zweifache der Breite des Verbindungsbereichs beträgt, zeigt eine bevorzugte Ausbildung der erfindungsgemäßen Schlegeleinheit sich dadurch aus, dass der Schlegelkopf verjüngt ausgebildet ist, wobei bevorzugt darüber hinaus der Schlegelkopf höchstens die Breite des Verbindungsabschnitts, vorzugsweise die gleiche Breite wie der Verbindungsabschnitt hat. Bei dieser Ausgestaltung des Schlegels ist bevorzugt vorgesehen, dass der Schlegelhalter als einstückiger Block mit sich senkrecht zum Haltestab erstreckendem Schlitz ausgebildet ist, in den der Schlegelkopf eingreift. Eine weitere bevorzugte Ausgestaltung sieht vor, dass ein Schlitz eines Blocks des Schlegelhalters sich zu der dem Schlegel zugewandten Seite des Blocks verbreitert, wobei insbesondere der Schlitz sich bogenförmig konvex, insbesondere parabelförmig verbreitert.

Hierdurch werden die oben genannten Verbesserungen hinsichtlich der Anordnung von Schwerkraft, Verteilung von Massen des Schlegels und die dadurch bewirkten Vorteile im Arbeitsvorgang unter Beibehaltung der hohen Beweglichkeit des Schlegels in dem ebenfalls oben angesprochenen drei Freiheitsgraden (umfangsmäßig um den Haltestab, radial und seitlich) weiter unterstützt und verbessert.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind.

Dabei zeigen:
- Fig. 1: eine perspektivische Darstellung eines Mulcher-Rotors mit an diesem angeordneten erfindungsgemäßen Schlegeleinheiten;
- Fig. 2: eine Frontansicht einer ersten Schlegeleinheit;
- Fig. 2.1: eine Frontansicht der Schlegeleinheit der Fig. 1 mit seitlich verschwenktem Schlegel;
- Fig. 2.2: eine vergrößerte perspektivische Darstellung der Ausführungsform des Schlegels der Fig. 2;
- Fig. 2.3: eine Seitenansicht des Schlegels der Fig. 2.2 mit einem Querschnitt durch den Haltestab der Einheit;
- Fig. 2.4: eine Schnittdarstellung entsprechend A-A der Fig. 2.3 der ersten Ausführungs- form des erfindungsgemäßen Schlegels;
- Fig. 2.5: die Anordnung zweier Schlegel der Fig. 2.2 in einer Doppel-Schlegel-Einheit;
- Fig. 3: eine zweite Ausführungsform eines erfindungsgemäßen Schlegels und
- Fig. 3.1: eine Seitenansicht der zweiten Ausführungsform des erfindungsgemäßen Schlegels der Fig. 3;

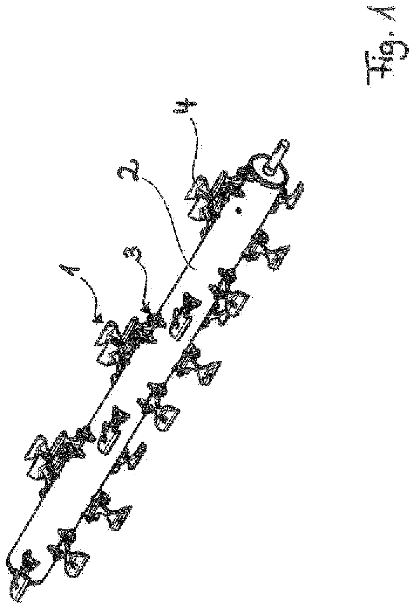

Erfindungsgemäße Schlegeleinheiten dienen zum Zerkleinern von Pflanzengut, insbesondere von Grünmasse und/oder Schwachholz, vorzugsweise in einem Mulcher. Die erfindungsgemäßen Schlegeleinheiten 1 sind dabei an einem Rotor 2 angebracht und zwar in Axialrichtung desselben schraubenförmig versetzt, beispielsweise in zwei Schraubenlinien, wie dies in der Fig. 1 dargestellt ist. Jede Schraubenlinie streckt sich umfangsmäßig hier um etwa 1,5 Windungen.

Eine Schlegeleinheit 1 besteht im Wesentlichen aus einem Schlegelhalter 3 mit am Rotor 2 zu befestigenden bzw. befestigten Haltewangen 3.1 und einem durch diese hindurchgesteckten Haltestab 3.2 oder Lagerbolzen, vorzugsweise in Form einer Maschinenschraube mit einem verbreiterten Schraubenkopf 3.3, einem festen zylindrischen Haltebereich und einem dem Schraubenkopf 3.3 angewandten Schraubende sowie einer auf das Schraubende aufgeschraubten Mutter 3.4, wodurch der Haltestab 2.3 in den Wangen 3.1 und damit am Rotor 2 gehalten ist.

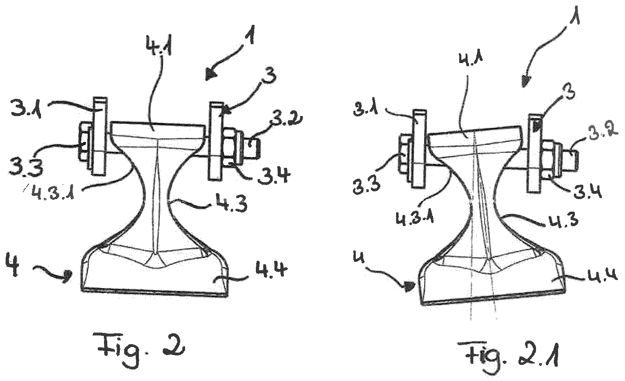

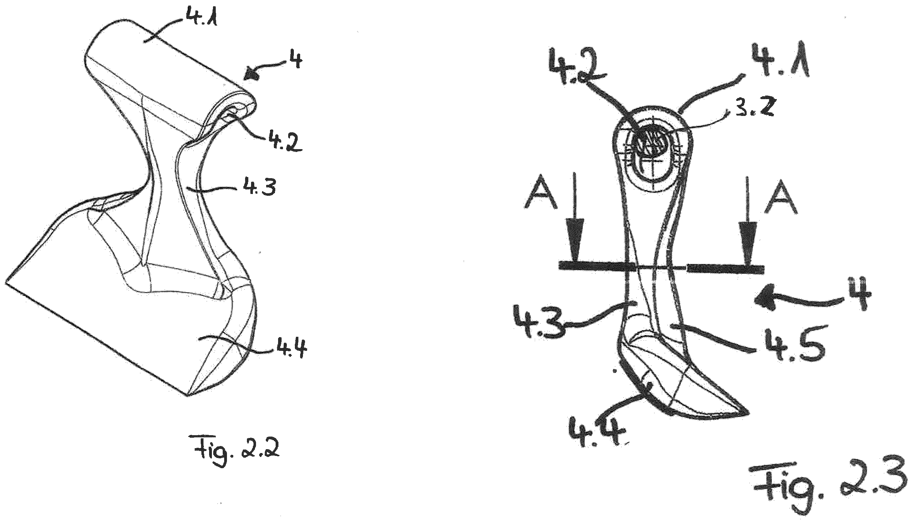

Die Schlegeleinheit 1 weist weiterhin einen Schlegel 4 auf, der schwenkbar um den Haltestab 3.2 auf diesem gehalten ist. Der Schlegel 4 weist hierzu einen Schlegelkopf 4.1 mit einem Durchbruch 4.2 oder einem Langloch auf. Der Schlegel 4 ist durch Umgreifen seines Durchbruchs 4.2 am Haltestab 3.2 gehalten. Der Haltestab 3.2 weist einen kreisrunden Querschnitt auf, wie insbesondere in Fig. 2.3 gezeigt ist; er ist also zylindrisch. Der Durchbruch 4.2 hat einen ovalen Querschnitt, dessen geringste Querabmessung - unter Berücksichtigung üblicher technischer Toleranzen dem Durchmesser des Haltestabs 3.2 entspricht, während die hierzu senkrechte zweite Querabmessung in Richtung auf den Schneidabschnitt 4.4 oder Messerkopf über übliche Toleranzen hin vergrößert ist. Der Durchbruch ist dabei im dargestellten Ausführungsbeispiel als Langloch in Erstreckungsrichtung des Schlegels 4 ausgelegt und weist einen im Wesentlichen ovalen Querschnitt mit größerer Erstreckungsrichtung in Richtung des Schlegels und kleinerer Querabmessung senkrecht hierzu auf, wie dies insbesondere in der Fig. 2.3 erkennbar ist.

Die Querabmessung des Durchbruchs 4.2 in Erstreckungsrichtung des Schlegels ist etwa das 1,4-fache der Breite des Langlochs senkrecht hierzu.

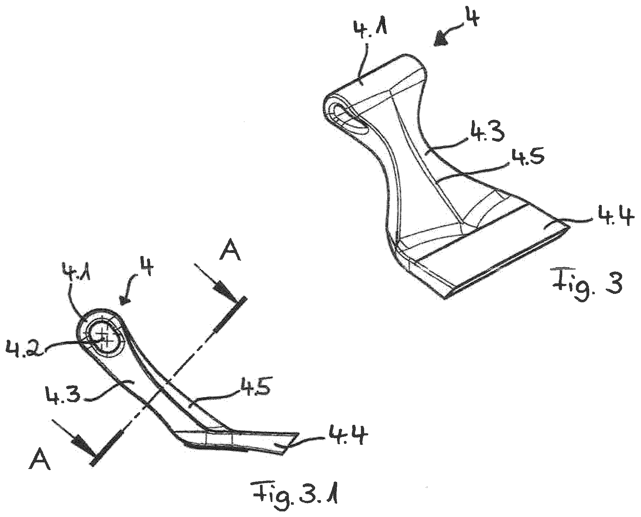

Durch diese Ausgestaltung bei zylindrischem Haltestab 3.2 kann der Schlegel 4 relativ zum Schlegelhalter 3 abgesehen von Verschwenken um den Haltestab 3.2 sich radial relativ zum Rotor 2 bewegen und andererseits auch in gewissem Maße in Richtung der Erstreckung des Haltestabs 3.2 kippen, wie dies in der Fig. 3.1. ersichtlich ist.

Ein Verbindungsbereich 4.3 zwischen Schlegelkopf 4.1 und einen Schneidabschnitt 4.4 ist gegenüber den beiden letzteren verjüngt, wie dies insbesondere der Fig. 2.2 zu entnehmen ist, wobei die Querabmessung des Verbindungsabschnitts 4.3 in Breitenrichtung des Schneidabschnitts 4.4 im dargestellten Ausführungsbeispiel weniger als 0,25 beträgt und auch weniger als die Hälfte der Breite des Schlegelkopfes 4.1. Zur Verstärkung des so in seiner Breite reduzierten Verbindungsabschnitts 4.3 ist auf der Vorderseite eine Rippe 4.5 vorgesehen.

Der Verbindungsbereich 4.3 weist ausgehend vom Schlegelkopf 4.1 bis etwa zur Mitte des Schlegels 4 eine schräge Ebene oder Kante 4.3.1 mit einem endlichen Winkel kleiner 90° zur Achse des Haltestabs 3.2 vorzugsweise zwischen 30° und 60°, hier etwa 40° auf. Hierdurch wird sowohl bei rotatorischer Bewegung des Schlegels 4 um den Haltestab 3.2, als auch bei translatorischer Bewegung des Schlegels 4 entlang der Achse des Haltestabs eine schälende Reinigung der Oberfläche des Stabs bewirkt. Dieser bleibt somit frei von Ablagerungen, so dass ein Werkzeugwechsel einfach ist.

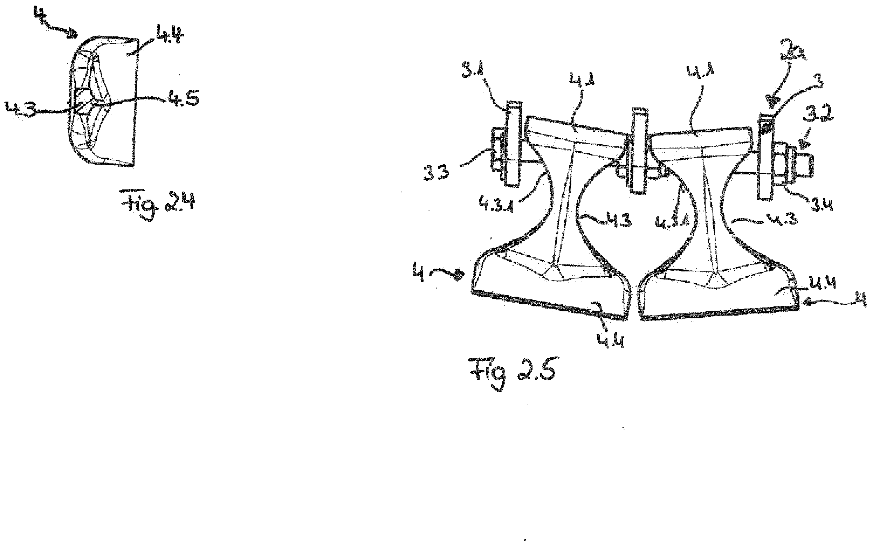

Die Fig. 2.5 zeigt, dass zwei Schlegel 4 der Ausgestaltung der Fig. 2.2 unmittelbar nebeneinander in einer Doppel-Schlegeleinheit 2a angeordnet werden können und dabei insbesondere ihre oben beschriebene seitliche Verschwenkbarkeit beibehalten.

Die Fig. 3 zeigt eine zweite Austührungsform eines erfindungsgemäßen Schlegels 4. Auch dieser weist zur Befestigung an einem Haltestab im Schlegelkopf 4.1 ein Langloch 4.2 in der beschriebenen Weise auf. Der Schlegel 4 besteht wiederum aus Schlegelkopf 4.1, Verbindungsabschnitt 4.3 und Schneidabschnitt 4.4. Der Verbindungsabschnitt 4.3 ist wiederum in der Breite sowohl gegenüber Schneidabschnitt 4.4 als auch gegenüber dem Schlegelkopf 4.1 verjüngt und weist zur Verstärkung an der Vorderseite eine Rippe 4.5 auf. Die Ausgestaltung der Fig. 3 ist für größere Schlegel vorgesehen. Daher ist der gesamte Schlegel etwas massiver ausgebildet als der Schlegel der Fig. 2 ff., insbesondere auch der Verbindungsabschnitt 4.3, dessen Breite dennoch unter 0,3 der Breite des Schneidabschnitts 4.4 liegt.

## Patentansprüche

1. Schlegeleinheit, insbesondere für einen Mulcher, mit einem Schlegelhalter (3) mit einem Haltestab (3.2) und mit einem Schlegel (4) mit einem den Haltestab (3.2) umgreifenden Durchbruch (4.2) in einem Schlegelkopf (4.1), wobei mindestens eine Quermessung des Durchbruchs (4.2) größer als die Querabmessungen des Haltestabs (3.2) ist, wobei der Schlegel (4) einen mittleren Verbindungsbereich (4.3) vom Schlegelkopf (4.1) zu einem Schneidabschnitt (4.4.) aufweist, der eine geringere Breite als der Schneidabschnitt (4.4) hat, **dadurch gekennzeichnet, dass** vom Schlegelkopf (4.1) etwa bis zur Mitte des Schlegel (4) eine Kante (4.3.1) derselben unter einem Winkel von 30° bis 60° verläuft.

2. Einheit nach Anspruch 1, **dadurch gekennzeichnet, dass** der Haltestab (3.2) zylindrisch ist und dass der Querschnitt des Durchbruchs (4.2) oval ist.

3. Einheit nach Anspruch 2, **dadurch gekennzeichnet, dass** die größere Querschnittsabmessung des Durchbruchs (4.2) sich in Richtung zu einem Schneidabschnitt (4.4) des Schlegels (4) erstreckt.

4. Einheit nach einem der Ansprüche 1 bis 3, **dadurch gekennzeichnet, dass** die größte Querabmessung des Durchbruchs (4.2) mindestens das 1,2- vorzugsweise mindestens 1,4-fache der größten Querabmessung des Haltestabs (3.2) ist.

5. Einheit nach einem der Ansprüche 1 bis 4, **dadurch gekennzeichnet, dass** der Durchbruch (4.2) ein Langloch ist.

6. Einheit nach einem der vorangehenden Ansprüche, **dadurch gekennzeichnet, dass** der Haltestab (3.2) einen zylindrischen Querschnitt hat.

7. Einheit nach einem der vorangehenden Ansprüche, **dadurch gekennzeichnet, dass** die Breite des Verbindungsbereichs (4.3) des Schlegel 4 höchstens 0,3, vorzugsweise höchstens 0,25 der Breite des Schneidabschnitts (4.4) beträgt.

8. Einheit nach einem der vorangehenden Ansprüche, **dadurch gekennzeichnet, dass** die Kante (4.3.1) unter einem Winkel zwischen 40° und 50° verläuft.

9. Einheit nach einem der vorangehenden Ansprüche, **dadurch gekennzeichnet, dass** der auf dem Haltestab (3.2) aufsitzende Schlegelkopf (4.1) eine Breite hat, die geringer ist als der Abstand von die axiale Bewegung des Schlegels (4) entlang des Haltestabs (3.2) begrenzenden radialen Begrenzungen (3.3, 3.4).

10. Einheit nach einem der vorangehenden Ansprüche, **dadurch gekennzeichnet, dass** der Schlegel (4) wenigstens in einem Verbindungsbereich (4.3) mindestens einseitig eine Rippe (4.5) aufweist, die sich senkrecht zur Breite des Schneidabschnitts (4.4) erstreckt, wobei insbesondere der Schlegel (4) beidseitig Rippen (4.5) aufweist.

11. Einheit nach einem der vorangehenden Ansprüche, **dadurch gekennzeichnet, dass** der Schlegelkopf (4.1) gegenüber einem Verbindungsbereich (4.3) verbreitert ausgebildet ist, wobei insbesondere die Breite des Schlegelkopfes (4.1) mindestens das Zweifache der Breite des Verbindungsbereichs (4.3) beträgt.

## Claims

1. Flail unit, in particular for a mulcher, comprising a flail holder (3) having a holding rod (3.2) and comprising a flail (4) having an opening (4.2) enclosing the holding rod (3.2) in a flail head (4.1), at least one transverse measurement of the opening (4.2) being larger than the transverse dimensions of the holding rod (3.2),
the flail (4) having a central connecting region (4.3) from the flail head (4.1) to a cutting portion (4.4), which connecting region has a narrower width than the cutting portion (4.4), **characterized in that,** from the flail head (4.1) to approximately the center of the flail (4), an edge (4.3.1) of the flail runs at an angle of 30° to 60°.

2. Unit according to claim 1, **characterized in that** the holding rod (3.2) is cylindrical and **in that** the cross section of the opening (4.2) is oval.

3. Unit according to claim 2, **characterized in that** the larger dimension of the cross section of the opening (4.2) extends in the direction of a cutting portion (4.4) of the flail (4).

4. Unit according to any of claims 1 to 3, **characterized in that** the largest transverse dimension of the opening (4.2) is at least 1.2 times, preferably at least 1.4 times, the largest transverse dimension of the holding rod (3.2).

5. Unit according to any of claims 1 to 4, **characterized in that** the opening (4.2) is a slot.

6. Unit according to any of the preceding claims, **characterized in that** the holding rod (3.2) has a cylindrical cross section.

7. Unit according to any of the preceding claims, **characterized in that** the width of the connecting region (4.3) of the flail 4 is at most 0.3, preferably at most 0.25 of the width of the cutting portion (4.4).

8. Unit according to any of the preceding claims, **characterized in that** the edge (4.3.1) runs at an angle between 40° and 50°.

9. Unit according to any of the preceding claims, **characterized in that** the flail head (4.1) mounted on the holding rod (3.2) has a width which is less than the distance from radial limits (3.3, 3.4) limiting the axial movement of the flail (4) along the holding rod (3.2).

10. Unit according to any of the preceding claims, **characterized in that** the flail (4) has a rib (4.5) at least on one side at least in a connecting region (4.3), which rib extends perpendicularly to the width of the cutting portion (4.4), the flail (4) in particular having ribs (4.5) on both sides.

11. Unit according to any of the preceding claims, **characterized in that** the flail head (4.1) is wider than a connecting region (4.3), the width of the flail head (4.1) in particular being at least twice the width of the connecting region (4.3).

## Revendications

1. Unité à fléau, en particulier pour un broyeur, comportant un support pour fléau (3) comportant une tige de maintien (3.2) et comportant un fléau (4) comportant une ouverture (4.2) dans une tête de fléau (4.1), laquelle ouverture entoure la tige de maintien (3.2), dans laquelle au moins une dimension transversale de l'ouverture (4.2) est supérieure aux dimensions transversales de la tige de maintien (3.2),
dans laquelle le fléau (4) présente une zone de liaison (4.3) centrale depuis la tête de fléau (4.1) jusqu'à une section de coupe (4.4), laquelle zone de liaison possède une largeur inférieure à celle de la section de coupe (4.4), **caractérisée en ce que,** depuis la tête de fléau (4.1) jusqu'environ au centre du fléau (4), une arête (4.3.1) de celui-ci s'étend selon un angle allant de 30° à 60°.

2. Unité selon la revendication 1, **caractérisée en ce que** la tige de maintien (3.2) est cylindrique **et en ce que** la section transversale de l'ouverture (4.2) est ovale.

3. Unité selon la revendication 2, **caractérisée en ce que** la plus grande dimension de section transversale de l'ouverture (4.2) s'étend en direction d'une section de coupe (4.4) du fléau (4).

4. Unité selon l'une des revendications 1 à 3, **caractérisée en ce que** la plus grande dimension transversale de l'ouverture (4.2) est d'au moins 1,2 fois, de préférence d'au moins 1,4 fois, la plus grande dimension transversale de la tige de maintien (3.2).

5. Unité selon l'une des revendications 1 à 4, **caractérisée en ce que** l'ouverture (4.2) est un trou oblong.

6. Unité selon l'une des revendications précédentes,
**caractérisée en ce que** la tige de maintien (3.2) possède une section transversale cylindrique.

7. Unité selon l'une des revendications précédentes,
**caractérisée en ce que** la largeur de la zone de liaison (4.3) du fléau (4) est d'au plus de 0,3, de préférence au plus de 0,25, la largeur de la section de coupe (4.4).

8. Unité selon l'une des revendications précédentes, **caractérisée en ce que** l'arête (4.3.1) s'étend selon un angle compris entre 40° et 50°.

9. Unité selon l'une des revendications précédentes,
**caractérisée en ce que** la tête de fléau (4.1) reposant sur la tige de maintien (3.2) possède une largeur inférieure à la distance des limites radiales (3.3, 3.4) limitant le mouvement axial du fléau (4) le long de la tige de maintien (3.2).

10. Unité selon l'une des revendications précédentes,
**caractérisée en ce que** le fléau (4) présente, au moins dans une zone de liaison (4.3), au moins d'un côté, une nervure (4.5) qui s'étend perpendiculairement à la largeur de la section de coupe (4.4), dans laquelle, en particulier, le fléau (4) présente des nervures (4.5) des deux côtés.

11. Unité selon l'une des revendications précédentes,
**caractérisée en ce que** la tête de fléau (4.1) est réalisée de manière à être élargie par rapport à une zone de liaison (4.3), dans laquelle, en particulier, la largeur de la tête de fléau (4.1) est d'au moins deux fois la largeur de la zone de liaison (4.3).
